# EUROPÄISCHE PATENTANMELDUNG

(11) **EP 1 164 110 A1**
(43) Veröffentlichungstag der Anmeldung: **19.12.2001**
(21) Anmeldenummer: 00810522.3
(22) Anmeldetag: 16.06.2000
(51) Int. Cl.: C02F 1/46

(54) **Kapazitive Deionisationseinrichtung**

(71) Anmelder: ABB RESEARCH LTD., 8050 Zürich (CH)
(72) Erfinder: Carlen, Martin, 5443 Niederrohrdorf (CH); Ohler, Christian, 5400 Baden (CH); Christen, Thomas, 5400 Turgi, Vogelsang (CH)
(74) Vertreter: ABB Patent Attorneys

(57) **Zusammenfassung**

Bei einer kapazitiven Deionisationseinrichtung werden die einzelnen Kondensatorzellen (2,2') elektrisch in Serie geschaltet. Dies bewirkt eine geringere Anfälligkeit der Einrichtung gegenüber Kurzschlüssen in einer Zelle und ein vereinfachtes Energiemanagement, da ein Vielfaches der Zellspannung ΔU an der Einrichtung anliegt. Vorteilhafte Ausführungen betreffen den Einsatz von Bipolar-Elektroden (23), bei welchen eine anodenseitige und eine kathodenseitige Elektrode zweier benachbarter Zellen zusammenfallen. Um Leckströme zwischen Elektroden (20",21") im Elektrolyten (3) zu reduzieren, wird der elektrische Widerstand der entsprechenden Leckstrompfade (5) erhöht durch eine Verringerung des Zuleitungsquerschnitts oder eine Verlängerung des Leckstrompfads. Alternativ dazu werden in einem neuen Verfahren die Zellen während dem Reinigungsprozess galvanisch getrennt.

## Beschreibung

### TECHNISCHES GEBIET

Die vorliegende Erfindung bezieht sich auf das Gebiet der Deionisationstechnik. Sie betrifft eine kapazitive Deionisationseinrichtung gemäss dem Oberbegriff des Patentanspruchs 1 sowie ein Verfahren zur Deionisierung einer Flüssigkeit gemäss dem Oberbegriff des Patentanspruchs 10.

### STAND DER TECHNIK

Kapazitive Deionisierungssysteme werden eingesetzt, um elektrisch geladene Teilchen oder Ionen aus einer Lösung zu entfernen. Dabei wird ein Elektrolyt beziehungsweise eine ionenhaltige Flüssigkeit in den Zwischenraum zwischen zwei entgegengesetzt geladenen Elektroden eines Kondensators gebracht. Entsprechend ihrer Polarität diffundieren die geladenen Teilchen zu einer der Elektroden und bilden mit dieser eine elektrische Doppelschicht (electric double layer). Die Reinigungsphase dauert an bis die Doppelschicht gesättigt ist und die Spannung zwischen den Elektroden hauptsächlich in der Doppelschicht abfällt und nicht mehr über dem flüssigkeitsgefüllten Zwischenraum. Für die folgende Regenerationsphase wird eine Sole (brine) genannte Lösung in den Zwischenraum gebracht und die Spannung zwischen den Elektroden zurückgesetzt oder sogar teilweise umgekehrt. Die Ionen der Doppelschicht diffundieren in die Sole zurück. Ein bestimmtes Volumen an Sole wird im Allgemeinen mehrere Male zur Regeneration der Elektroden verwendet, wobei sich die Ionenkonzentration in der Sole mit jedem Mal weiter erhöht.

Eine Einrichtung zur kapazitiven Deionisierung umfasst normalerweise mehrere Einheiten oder Zellen, welche in ihrem Aufbau einem Superkondensator oder Doppelschichtkondensator ähnlich sind. Je nach Spannungsabfall an den Elektroden beträgt die maximale Spannung, mit welcher eine derartige Kondensatorzelle belastet werden darf, für wässrige Elektrolyte 1.3 bis 3 V. Dies deshalb, weil ab einer bestimmten Spannung über den zwei Doppelschichten die Elektrolyse des Wassers einsetzen kann oder es zu Redoxreaktionen an den Elektroden kommt. Elektrisch sind die Zellen parallelgeschaltet, hydrodynamisch sind sie seriell oder parallel angeordnet, d.h. eine zu reinigende Flüssigkeitsmenge kann auf verschiedene parallelverarbeitete Teilmengen oder -volumina aufgeteilt werden oder mehrere Zellen nacheinander durchfliessen. Für den maximalen Durchsatz an Flüssigkeit, d.h. die Leistung der Einrichtung ist hauptsächlich die aktive Gesamtelektrodenoberfläche massgebend. Letztere wird erhöht durch Verwendung von porösen Elektrodenbeschichtungen.

In der US 5,980,718 ist ein kapazitives Deionisierungssystem zur Wasserreinigung offenbart, welches einen Stapel aus elektrisch parallelgeschalteten und hydrodynamisch in Serie angeordneten Einzelzellen umfasst. Jede dieser Zellen besteht aus zwei kohlenstoffbeschichteten Titan-Elektroden, welche in einem Abstand von etwa 0.5 mm zueinander angeordnet sind. Falls sich in der Lösung leitende Teilchen befinden, deren Linearausdehnung in zumindest einer Dimension grösser oder nur geringfügig kleiner als der Elektrodenabstand ist, besteht die Möglichkeit, dass die Elektroden einer Zelle kurzgeschlossen werden. Die geladenen Kondensatoren der parallelgeschalteten restlichen Zellen entladen sich durch diesen Kurzschlusspfad. Besagte leitende Teilchen können beispielsweise abgetrennte Teile einer Elektrodenbeschichtung sein. Zur Vermeidung eines Totalausfalls sind die einzelnen Zellen mit Sicherungen versehen, welche im Kurzschlussfall die betroffene Zelle elektrisch isolieren. Weiter sind Filter vorhanden, welche verhindern sollen, dass ein grosses Teilchen durch mehrere Zellen geschwemmt wird und letztere nacheinander einzeln kurzschliesst. Die Wirkung dieser Filter ist aber bei nadelförmig ausgebildeten Teilchen zweifelhaft.

### DARSTELLUNG DER ERFINDUNG

Aufgabe der vorliegenden Erfindung ist es, bei einer kapazitiven Deionisationseinrichtung zur Deionisierung einer ionenhaltigen Flüssigkeit mit mehreren Einzelzellen zu verhindern, dass ein Kurzschluss in einer Zelle zum Ausfall des gesamten Systems führt. Diese Aufgabe wird durch eine kapazitive Deionisationseinrichtung mit den Merkmalen des Patentanspruchs 1 gelöst.

Kern der Erfindung ist es, die Zellen elektrisch in Serie zu schalten. Somit führt ein Kurzschluss in einer Zelle nicht zur Entladung aller anderen Zellen, sondern nur zum Ausfall der betroffenen Zelle, ohne dass dazu der Einsatz von zusätzlichen Sicherungen vonnöten ist.

Aufgrund der Ionenleitfähigkeit in der zu reinigenden Flüssigkeit stellt diese selbst einen leitenden Strompfad zwischen Elektroden verschiedener Zellen dar. Da die elektrische Potentialdifferenz zwischen diesen Elektroden aber ein Vielfaches der Zellspannung beträgt, ist nicht auszuschliessen, dass über gewissen elektrischen Doppelschichten der Spannungsabfall zu gross wird und die Elektrolyse des Wassers oder Redoxreaktionen an den Elektroden einsetzten. In einer vorteilhaften Ausführungsform sind deshalb Mittel vorgesehen, welche sicherstellen, dass die elektrische Impedanz des durch die Lösung führenden Leckstrompfades genügend hoch bleibt. Dadurch fliessen nur geringe Leckströme, und die anliegende Spannung fällt hauptsächlich über dem Elektrolyten ab und nicht an den Doppelschichten.

Vorzugsweise sind die Doppelschichtkapazitäten der endseitigen Elektroden, welche direkt mit der Anode und der Kathode der Spannungsquelle verbunden sind, möglichst gross gewählt. Dadurch verringert sich die Impedanz und die Spannungsbelastung der endseitigen Doppelschichten, und das Verhältnis der Leckstrompfadimpedanz zur Impedanz des direkten Strompfades über die seriegeschalteten Zellen nimmt weiter zu.

Die Einhaltung einer Mindeststrompfadlänge stellt bei gegebenem Gefässquerschnitt eine notwendige Bedingung für eine hohe Leckstromimpedanz dar. Eine Verlängerung besagter Strompfade wird beispielsweise erreicht, indem für verschiedene Zellen getrennte Zuleitungen vorgesehen werden, oder durch den Einbau von Verbreiterungen oder die Reduktion von gewissen geometrischen Elektrodenoberflächen.

Eine bevorzugte Ausführungsform der erfindungsgemässen Einrichtung umfasst einen sogenannten bipolaren Aufbau, d.h. es werden Bipolar-Elektroden eingesetzt, welche wasserdicht sind und in zwei benachbarten Zellen gleichzeitig als Elektroden fungieren. Dadurch ergeben sich eine Reihe weiterer Vorteile, so ein platzsparender Aufbau sowie ein Wegfall von Kontaktwiderständen an den Bipolar-Elektroden und damit ein geringerer Innenwiderstand der Einrichtung.

In einer alternativen Ausführungsform sind Absperrvorrichtungen oder Ventile vorgesehen, welche erfindungsgemäss die einzelnen Zellen während dem Reinigungsprozess voneinander abkoppeln. Eine Ionenleitung durch den Elektrolyten ist somit nur noch bei geöffneten Ventilen möglich, d.h. während dem Austausch der Flüssigkeit in den Zellen.

Vorteilhafterweise werden die Zellen fluid- oder hydrodynamisch parallel angeordnet. Dies verhindert, dass leitende Teilchen ausreichender Grösse in mehrere Zellen geschwemmt werden und dort zu Kurzschlüssen führen. Ist insbesondere eine Elektrode brüchig und werden davon grössere Teilchen abgetrennt, so verursachen diese keine weiteren Schäden an anderen Zellen.

Ein weiterer Vorteil der erfindungsgemässen elektrischen Serieschaltung liegt darin, dass die Systemspannung erhöht werden kann und nicht auf die Spannung einer Einzelzelle beschränkt ist. Dies ermöglicht geringere Stromstärken, weniger Verluste in den elektrischen Anschlussleitern und somit höhere Wirkungsgrade.

Weitere vorteilhafte Ausführungsformen gehen aus den abhängigen Patentansprüchen hervor.

### KURZE BESCHREIBUNG DER FIGUREN

Nachfolgend wird die Erfindung anhand von Ausführungsbeispielen im Zusammenhang mit den Zeichnungen näher erläutert. Es zeigen
Fig.1 ein Längsschnitt durch eine Deionisationseinrichtung nach dem Stand der Technik mit elektrisch parallelgeschalteten Einzelzellen, wobei dargestellt sind in
   Fig.1a eine hydrodynamische Parallelanordnung der Zellen
   Fig.1b eine hydrodynamische Serieanordnung der Zellen
   Fig.1c ein Ersatzschaltbild;
Fig.2 ein Schema einer Deionisationseinrichtung nach der Erfindung mit elektrisch in Serie geschalteten Einzelzellen, wobei dargestellt sind in
   Fig.2a eine hydrodynamische Parallelanordnung der Zellen
   Fig.2b eine hydrodynamische Serieanordnung der Zellen und
   Fig.2c ein Ersatzschaltbild;
Fig.3 eine Deionisationseinrichtung gemäss einer bevorzugten Ausführungsform mit Bipolar-Elektroden, wobei dargestellt sind in
   Fig.3a ein Längsschnitt und
   Fig.3b ein Ersatzschaltbild;
Fig.4 Eine weitere Ausführungsform der Erfindung mit Absperrvorrichtungen.

Die in den Zeichnungen verwendeten Bezugszeichen sind in der Bezugszeichenliste zusammengefasst. Grundsätzlich sind gleiche Teile mit denselben Bezugszeichen versehen.

### WEGE ZUR AUSFÜHRUNG DER ERFINDUNG

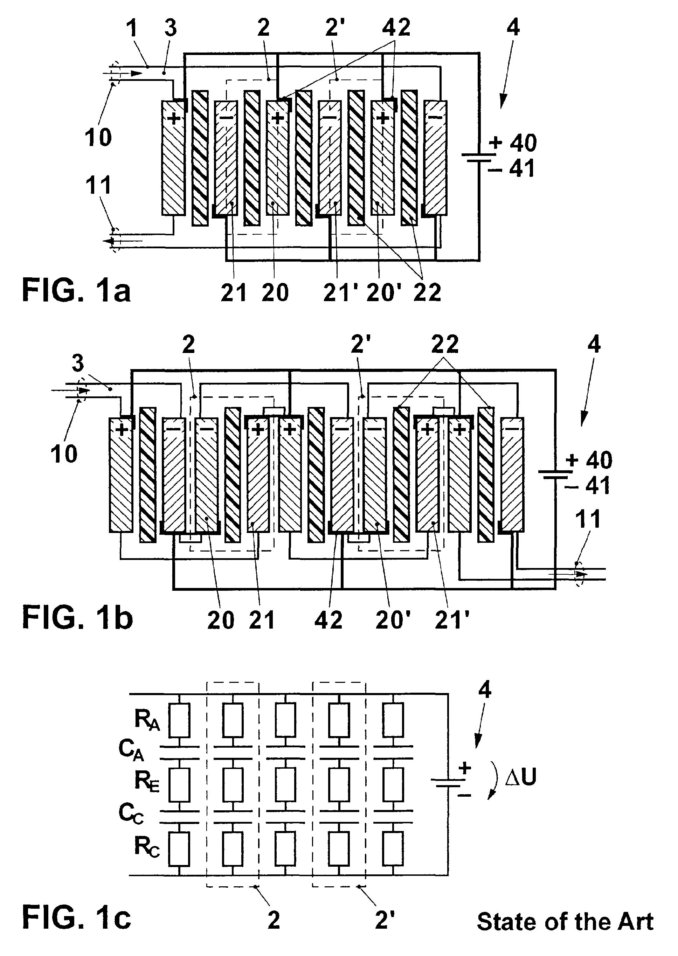

In Fig.1 ist eine kapazitive Deionisationseinrichtung nach dem Stand der Technik gezeigt, wobei Fig.1a und Fig.1b einen Längsschnitt durch die Einrichtung und Fig.1c ein Ersatzschaltbild darstellen. Die Einrichtung umfasst insgesamt fünf Kondensatorzellen, wovon zwei Zellen 2,2' gestrichelt umrandet sind. Jede einzelne der fünf Zellen 2,2' weist zwei Elektroden 20,20',21,21' auf, welche elektrisch parallelgeschaltet sind, d.h. die erste Elektrode 20,20' einer Zelle ist mit der Anode 40 und die zweite Elektrode 21,21' einer Zelle ist mit der Kathode 41 einer Gleichspannungsquelle 4 verbunden. Die Elektroden werden durch Stromkollektoren oder -sammler 42 (current collector) kontaktiert. Während einer Reinigungsphase liefert die Spannungsquelle 40 eine Zellspannung ΔU von 1-2 V. Im Zwischenraum zwischen den Elektroden einer Zelle befindet sich möglicherweise ein elektrisch isolierender, poröser Separator oder Distanzhalter 22 (spacer), welcher verhindert, dass sich die Elektroden 20,21; 20',21' berühren.

Ein wasserdichtes, elektrisch nichtleitendes Gefäss 1 mit einem Einlass 10 und einem Auslass 11 umgibt die Einrichtung und leitet die zu reinigende Flüssigkeit oder Elektrolyten 3 zu den einzelnen Zellen. Die in Fig.1a gezeigte hydrodynamische Parallelanordnung der Zellen weist einen geringen Flusswiderstand auf. Die dargestellten Elektroden werden doppelseitig genutzt und erlauben einen kompakten Aufbau. In Fig.1b ist die hydrodynamische Anordnung der Zellen in Serie, d.h. die fünf Zellen werden jeweils nacheinander von demselben Flüssigkeitsvolumen durchströmt. Dieser Aufbau umfasst konventionelle, voneinander abgesetzte Kondensatorzellen ohne doppelseitig genutzte Elektroden.

Fig.1c zeigt ein elektrisches Ersatzschaltbild der Einrichtung nach dem Stand der Technik. Zu jeder Zelle gehört ein anodenseitiger Elektrodenwiderstand R_{A}, eine Anodenkapazität C_{A}, ein ionischer Elektrolytwiderstand R_{E}, eine Kathodenkapazität C_{C} und ein kathodenseitiger Elektrodenwiderstand R_{C}. Zu R_{A}, R_{C} sind auch die Kontaktwiderstände zwischen den Elektroden 20,21,20',21' und den Stromkollektoren 42 zu zählen. Die beiden Kapazitäten C_{A}, C_{C} entsprechen den zwei elektrischen Doppelschichten, welche sich an den Elektrode/Elektrolytübergängen ausbilden. Wird die Spannung der Quelle 4 eingeschaltet, so fällt die Zellspannung ΔU zuerst über dem Elektrolyten 3 ab und beschleunigt die Ionen zu den Elektroden hin. Je mehr Ionen sich an den Elektroden anlagern, d.h. mit zunehmender Ladung der Doppelschichten, bildet sich ein Spannungsabfall über den entsprechenden Kapazitäten C_{A},C_{C} aus. Spätestens sobald die Doppelschichten gesättigt, d.h. vollständig mit Ionen bedeckt sind, fliesst kein Strom mehr im Elektrolyten und über R_{E} sowie R_{A} und R_{C} fällt keine Spannung mehr ab. Die Fliessgeschwindigkeit der Flüssigkeit 3 beziehungsweise die Verweildauer der Ionen ist so bemessen, dass jedes Ion in der Flüssigkeit 3 auch bei abgeschirmter oder infolge fortschreitender Elektrodensättigung abnehmender Spannung im Elektrolyten ausreichend beschleunigt wird und eine der Elektroden erreicht, noch bevor es aus dem Zwischenraum wieder hinausgeschwemmt wird.

Um die Beladung mit einer möglichst grossen elektrischen Ladungsmenge, d.h. eine Anlagerung möglichst vieler Ionen zu ermöglichen, müssen die Doppelschichtkapazitäten C_{A}, C_{C} maximiert werden. Deshalb sind Elektroden mit einer grossen aktiven Oberfläche gefragt, welche überdies gegenüber dem Elektrolyten inert sein sollen. Kohlenstoffhaltige Materialien sind besonders geeignet, beispielsweise in Form von Fasern, Geweben, Aerogel, Pulver oder Glaskohlenstoff (glassy carbon), welche möglicherweise auf metallische Träger aufgebracht sind oder als selbsttragende Elektroden in Form von Kohlenstoffplatten eingesetzt werden. Es lassen sich aktive Oberflächen erreichen, welche je nach der Dicke der porösen kohlenstoffhaltigen Schicht die geometrische oder sichtbare Oberfläche der Elektroden um bis zu acht Grössenordnungen übertreffen. Die geometrische Oberfläche einer Elektrode kann auch in mehrere Teile zerfallen, die gegebenenfalls alle mit demselben Stromkollektor verbunden sind.

Wie eingangs dargelegt, besteht bei elektrischen Parallelschaltungen ohne besondere Vorkehrungen die Gefahr, dass beim Kurzschluss in einer Zelle alle anderen Zellen sich über die kurzgeschlossene Zelle entladen. Diese kann dadurch dauerhaft beschädigt werden, zudem werden die an den intakten Zellen angelagerten Ionen wieder in die Flüssigkeit abgegeben. Im Weiteren stellt die Begrenzung der Systemspannung auf 1.3 bis 2 V einen grossen Nachteil dar. Da bei Halbleiterbauelementen auf Siliziumbasis, welche in Um- und Gleichrichtern oder dergleichen eingesetzt werden, der Spannungsabfall in Durchlassrichtung in derselben Grössenordnung liegt, ist der Wirkungsgrad beim Gleichrichten stark eingeschränkt. Analoge Probleme ergeben sich bei der Energierückgewinnung während der Regenerationsphase. Weiter sind für dieselbe Leistung höhere Stromstärken erforderlich, was wiederum höhere ohm'sche Verluste nach sich zieht oder eine entsprechende Dimensionierung der Leiterquerschnitte erfordert.

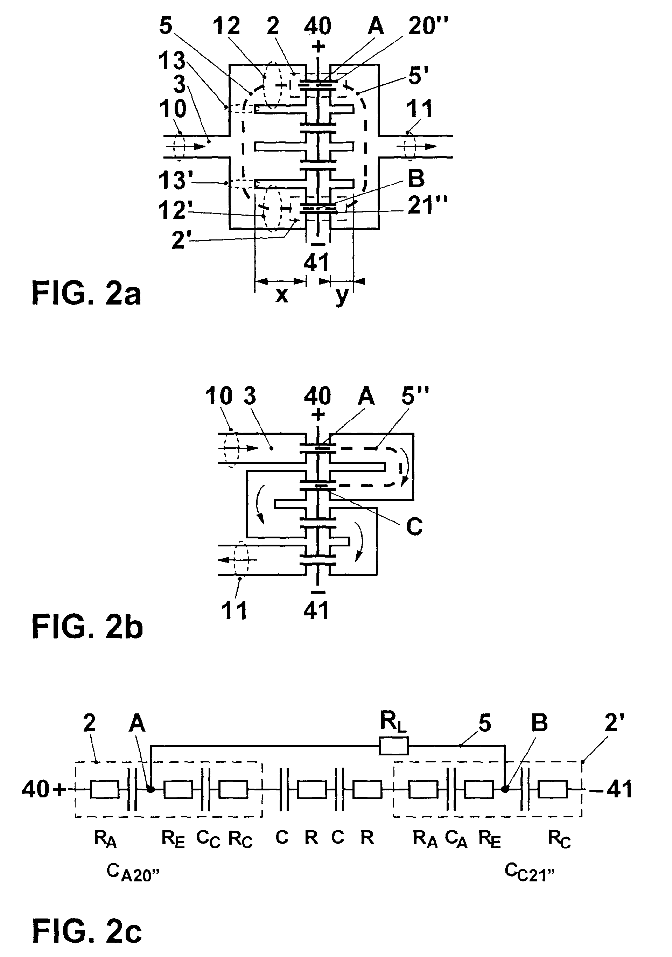

In Fig.2 ist eine Deionisationseinrichtung mit einer erfindungsgemässen elektrischen Serieschaltung von Einzelzellen schematisch dargestellt. Fig.2a zeigt eine hydrodynamische Parallelanordnung und Fig.2b eine Serieanordnung von jeweils vier Zellen. Das Gefäss 1 sorgt für eine entsprechende Zu- und Ableitung der Flüssigkeit 3 zu den Zellen. Aus Gründen der Übersichtlichkeit sind die Zellen deutlich voneinander abgesetzt gezeichnet, was einer Verwendung von konventionellen Kondensatorzellen entspricht. Das Gefäss 1 umfasst individuelle Zuleitungen 12,12' zu den Zellen 2,2', beispielsweise in Form von Schläuchen. In Fig.2c ist das entsprechende elektrische Ersatzschaltbild ersichtlich. R_{A} und R_{C} bezeichnen weiterhin den anoden- respektive kathodenseitigen Elektrodenwiderstand, obschon die jeweiligen Elektroden nicht unmittelbar mit der Anode 40 respektive Kathode 41 der Spannungsquelle verbunden sind. Letztere liefert im vorliegenden Fall das Vierfache der Zellspannung ΔU.

Zu beachten ist, dass zwischen den Punkten A und B der Einrichtung in Fig.2a, d.h. zwischen der anodenseitigen Endelektrode 20" und der kathodenseitigen Endelektrode 21", die erwähnte Gesamtspannung von ≈ 4 · △U anliegt. Die gelösten Ionen bewirken eine gewisse elektrische Leitfähigkeit der Flüssigkeit 3, so dass zwischen A und B alternative, ausschliesslich auf Ionenleitung beruhende Leckstrompfade (leakage current paths) 5,5' definiert werden können. Letztere drohen unter Umständen den direkten Strompfad kurzzuschliessen, welcher in Fig.2 in gerader Linie über die seriegeschalteten Zellen die Anode 40 mit der Kathode 41 verbindet und sowohl auf Ionenleitung wie auch auf nicht-ionischer Leitung beruht. Dadurch kann es zu einem erhöhten Spannungsabfall über den Doppelschichten und einer Elektrolyse des Wassers oder gegebenenfalls eines anderen, eventuell organischen Lösungsmittels wie Alkohol, kommen. Im Ersatzschaltbild von Fig.2c ist eine entsprechende elektrische Bypass- oder Leckimpedanz R_{L} zwischen den Punkten A und B eingezeichnet. Selbstverständlich sind auch alle weiteren alternativen Leckstrompfade zwischen zwei zu unterschiedlichen Zellen gehörigen Elektroden zu beachten. Auch in der hydrodynamischen Serieanordnung gemäss Fig.2b sind solche Leckstrompfade definiert, beispielsweise der Strompfad 5", an welchem die doppelte Zellspannung anliegt. Zwei Elektroden können nur dann auf einem verschiedenen Potential gehalten werden, falls der alternative Strompfad eine charakteristische Zeitkonstante τ_{L} = R_{L}·C aufweist, welche viel grösser ist als die Zeitkonstante des direkten Strompfades. Der Leckimpedanz R_{L} muss also ausreichend gross sein um den alternativen Strompfad unattraktiv zu machen und potentielle Leckströme zu reduzieren.

Ein ausreichend grosser Leckwiderstand R_{L} wird beispielsweise erreicht, indem die Länge der Leckstrompfade 5,5',5" erhöht wird oder der Querschnitt des Ionenleiters, d.h. des Gefässes 1, verringert wird. In einer Ausführung gemäss Fig.2 mit konventionellen, einzeln angeordneten Zellen führen vom Einlass 10 getrennte, elektrisch isolierende Zuleitungen 12,12' zu den Zellen 2,2' hin. An den Verjüngungsstellen 13,13' weisen die Zuleitungen 12,12' ihren kleinsten Querschnitt auf. Dieser ist so bemessen, dass der elektrische Widerstand des Elektrolyten an dieser Stelle möglichst gross ist, ohne dabei den Flüssigkeitsdurchfluss zu stark zu behindern. Die Länge der einzelnen Zuleitungen 12,12' ist in Fig.2a mit x bezeichnet. Auf der Einlassseite 10 ist die Ionenkonzentration N₀ und damit die spezifische Leitfähigkeit höher als auf der Auslassseite 11, dementsprechend ist die einlassseitige Ausdehnung x der Zuleitungen grösser als die auslassseitige Ausdehnung y zu wählen. In der Ausführung gemäss Fig.2b mit hydrodynamischer Serieschaltung der Zellen liegt am Leckstrompfad 5" zwischen den Punkten A und C nur die doppelte Zellspannung 2·ΔU an, zudem ist die Ionenkonzentration durch die Wirkung der ersten Zelle bereits auf einen Wert unterhalb N₀ reduziert. Jede weitere Passage in einer der Zellen reduziert den Ionengehalt und verringert somit die Minimallänge des nachfolgenden Gefässabschnitts.

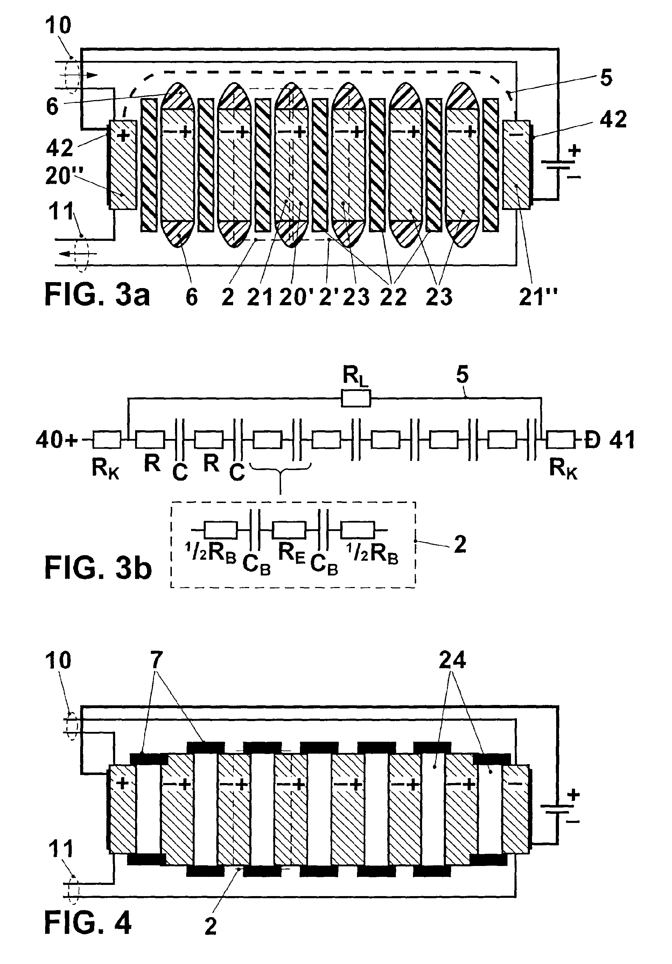

Fig.3a zeigt im Längsschnitt einen sogenannt bipolaren Aufbau einer Deionisierungseinrichtung unter Verwendung von Bipolar-Elektroden 23. Letztere werden doppelseitig eingesetzt, d.h. eine erste 21 und eine zweite 20' Oberfläche ein und derselben Kohlenstoffplatte werden in zwei benachbarten Kondensatorzellen 2,2' als Elektroden entgegengesetzter Polarität verwendet. Der dargestellte Stapel umfasst abwechselnd eine Bipolar-Elektrode 23 und einen Separator 22 oder sonstigen Abstandshalter. Der Abstand zwischen den Elektroden einer Zelle ist im übrigen ein Kompromiss zwischen elektrischen und hydrodynamischen Anforderungen. Der Querschnitt der Einrichtung senkrecht zum Stapel und zur Stromrichtung kann eine beliebige Form annehmen. Aus dem Gebiet der Super- oder Ultrakondensatoren ist ein entsprechender bipolarer Aufbau bekannt, beispielsweise aus dem Artikel "Bipolar Glassy Carbon Electrochemical Double-Layer Capacitor: 100'000 Cycles Demonstrated" von M. Bärtsch et al., J. New Mat. Electrochem. Systems 2, Seite 273-277 (1999). Obschon in Fig.3a nur eine hydrodynamische Parallelanordnung der Zellen dargestellt ist, ist bei einer entsprechenden Ausbildung des Gefässes 1 auch eine hydrodynamische Serieanordnung denkbar.

Die Elektroden 20",21" am anoden- und kathodenseitigen Ende des Stapels sind auf ihrer Rückseite grossflächig und somit unter einem kleinen Kontaktierungswiderstand mit einem Stromkollektor 42 verbunden. Alle anderen Elektroden sind nur über den Elektrolyten an die Spannungsquelle angeschlossen, so dass sich weder Kontaktierungsprobleme noch eine Reduktion der Elektrodenfläche durch Stromkollektoren ergeben. Da Bipolar-Elektroden 23 von zwei benachbarten Zellen gemeinsam genutzt werden, fällt die elektrische Verbindung zwischen zwei benachbarten Zellen weg und der Innenwiderstand der Anordnung verringert sich. Somit reduziert sich auch der interne Spannungsabfall beziehungsweise die interne Verlustleistung. Die vorzugsweise aus thermisch aktivierten Glaskohlenstoff gefertigten Bipolar-Elektroden verfügen über Poren, welche ins Innere des Elektrodenmaterials führen, sind im Gegensatz zu Aerogel-Elektroden jedoch wasserdicht und ionenundurchlässig und weisen eine hohe aktive Oberfläche auf. Die entsprechenden Doppelschichtkapazitäten C_{A}, C_{C} betragen bis zu 2 F/cm². Im Weiteren ergibt sich ein platzsparender Aufbau für unterschiedliche Spannungen zwischen 3 und einigen 100 V.

In Fig.3b ist das elektrische Ersatzschaltbild aufgezeichnet. Die endseitigen Kontaktwiderstände R_{K} bezeichnen den Übergang vom Stromkollektor 42 zu den beiden Endelektroden 20",21", welche direkt mit der Anode respektive Kathode der Spannungsquelle verbunden sind. Der Widerstand R_{B} einer nichtendseitigen Bipolar-Elektrode ist sinngemäss zu gleichen Teilen auf die zwei angrenzenden Zellen aufgeteilt. C_{B} bezeichnet die Doppelschichtkapazität einer Bipolar-Elektrode, welche hier vereinfachend als für beide Elektrodenseiten gleich gross angenommen wurde.

Bei einer hydrodynamischen Parallelanordnung der Zellen ist der durch Ionenleitung in der Lösung definierte alternative Leckstrompfad 5 zwischen den Endelektroden 20",21" in Fig.3a strichpunktiert eingezeichnet und in Fig.3b durch den Widerstand R_{L} repräsentiert. An diesem Strompfad 5 liegt die grösstmögliche Spannung an. Um seine Länge und damit seinen Widerstand zu erhöhen sind die Endelektroden 20",21" quer zur Anordnung weniger ausgedehnt vorzusehen. Letztere weisen also eine reduzierte geometrische Oberfläche auf, wie im Längsschnitt durch die Einrichtung in Fig.3a gezeigt.

Diese Reduktion der geometrischen Querausdehnung sollte jedoch zu keiner Einbusse bei der aktiven Oberfläche und damit der Doppelschichtkapazität C_{A}20", C_{A}21" der Endelektroden 20",21" führen. Dazu kann die aktive Schicht der Endelektroden dicker sein als bei den Bipolar-Elektroden, d.h. tiefere Poren aufweisen. Eine möglichst grosse Endelektrodenkapazität hat weitere Vorteile. Obschon an den Endelektroden die grösstmögliche Spannung anliegt, steigt die Spannung in der zugehörigen Doppelschicht langsamer als an den übrigen Bipolar-Elektroden. Mit vergrösserter Endelektrodenkapazität nimmt die entsprechende Impedanz ab, welche in Serie zu den Leckstrompfaden wie auch dem direkten, über die seriegeschalteten Zellen führenden Strompfad steht. Dies führt zu einer weiteren Verbesserung des Impedanzverhältnisses zugunsten des Letzteren.

Um einen Widerstand zwischen zwei nicht endseitigen Zellen anzuheben, wird die Länge der Leckstrompfade verlängert, indem die Bipolar-Elektroden randseitig mit einer elektrisch isolierenden Verbreiterung oder Abdeckung 6 versehen werden. Diese Verbreiterung oder Abdeckung 6 impliziert einen Umweg für den Ionentransport zwischen benachbarten Zellen und die zur Ausführungsform gemäss Fig.2 gemachten Bemerkungen finden Anwendung.

Die Bipolarausführung weist weitere Vorteile auf. Die Stromleitung in den Bipolar-Elektroden 23 erfolgt senkrecht zur Ebene der Elektroden und nicht in der Ebene, wie dies beispielsweise in Fig.1a der Fall ist, wo jede Elektrode über einen Stromkollektor 42 seitlich kontaktiert wird. Weist die Bipolar-Elektrode einen Riss auf, so behindert dies die Funktion der Einrichtung somit nicht.

Eine weitere Möglichkeit, bei einer hydrodynamischen Parallelanordnung von Einzelzellen unerwünschte Entladungen über Leckstrompfade zu vermeiden, besteht im Einsatz von Absperrvorrichtungen 7. In Fig.4 sind diese schematisch dargestellt, wobei aus Gründen der Übersichtlichkeit im Bereich der Zwischenräume 24 zwischen den Elektroden einer jeder Zelle keine Separatoren eingezeichnet sind. Absperrvorrichtungen 7 in Form von Ventilen oder Hahnen trennen in geschlossenem Zustand den Zwischenraum 24 einer Zelle 2 gegenüber den Zu- und Ableitungen 12 wasserdicht ab. Somit ist auch keine Ionenleitung in die oder aus der Zelle 2 mehr möglich. Nur in geöffnetem Zustand der Absperrvorrichtungen 7, d.h. während einem Austausch der Flüssigkeit im Zwischenraum 24, sind die Leckstrompfade durchgehend. Entsprechend muss der Flüssigkeitsaustausch möglichst schnell geschehen. Vorteilhafterweise sind die Elektroden seitlich gegenüber den Zuleitungen abgedichtet und stehen nur mit der im Zwischenraum 24 vorhandenen Flüssigkeit in Kontakt.

Das entsprechende Verfahren zum Betrieb einer Einrichtung gemäss Fig.4 umfasst die folgenden Schritte. Zu Beginn einer Regenerationsphase wird eine Sole in die Zwischenräume gebracht und die Spannung an der Einrichtung so gewählt, dass die Ionen aus den Doppelschichten in die Sole diffundieren oder driften. Sobald die Ladungen der Doppelschichten abgebaut sind, wird die Sole aus den Zwischenräumen gespühlt. Im Anschluss daran werden die auslassseitigen Ventile geschlossen und die Zwischenräume mit ionenhaltiger, zu reinigender Flüssigkeit gefüllt. Darauf werden die einlassseitigen Hahnen geschlossen und die Spannung am Stapel erhöht, bis an jeder Zelle die Zellspannung ΔU anliegt. Sobald die ruhenden Flüssigkeitsvolumina in den Zwischenräumen ihre Ionen an die Doppelschichten abgegeben haben, werden die auslassseitigen Ventile kurz geöffnet und die gereinigte Flüssigkeit entleert. Während diesem Prozess bleibt die Spannung an der Zelle bevorzugterweise aufrechterhalten. Daraufhin werden die einlassseitigen Hahnen geöffnet, und entweder ein nächstes Flüssigkeitsvolumen oder, falls die Doppelschichten schon gesättigt sind, die Sole zur Einleitung der nächsten Regenerationsphase eingefüllt.

Zusammenfassend ergibt sich eine Einrichtung zu Deionisierung einer Flüssigkeit, welche auf Kurzschlüsse in den Zellen weniger anfällig ist. Zudem sind im System höhere Spannungen möglich, und damit kleinere Ströme und geringere elektrische Verluste. Wegen der erhöhten Spannung können existierende Leistungselektronikkomponenten für ein vereinfachtes Energierückgewinnungsmanagement während der Regenerationsphase eingesetzt werden. Zur weiteren Leistungssteigerung sind zusätzlich elektrische Parallelschaltungen von weiteren erfindungsgemässen Serieschaltungen von Kondensatorzellen denkbar. Andererseits ist eine höhere Korrosionsbeständigkeit vonnöten und einer ungleichen Spannungsverteilung zwischen den einzelnen Zellen ist vorzubeugen.

### BEZUGSZEICHENLISTE

- 1: Gefäss
- 10: Einlass
- 11: Auslass
- 12,12': Zuleitung
- 13,13': Verjüngung
- 2,2': Zellen
- 20,20': erste, anodenseitige Elektrode
- 21,21': zweite, kathodenseitige Elektrode
- 22: Separator
- 23: Bipolar-Elektrode
- 24: Zwischenraum
- 3: Ionenhaltige Flüssigkeit, Elektrolyt
- 4: Spannungsquelle
- 40: Anode
- 41: Kathode
- 42: Stromkollektor
- ΔU: Zellspannung
- 5,5',5": Leckstrompfad
- 6: Verbreiterung
- 7: Absperrvorrichtung

## Patentansprüche

1. Kapazitive Deionisationseinrichtung zur Deionisierung einer ionenhaltigen Flüssigkeit (3), mit mindestens zwei Zellen (2,2'), welche mit einer Spannungsquelle (4) verbunden sind, wobei jede Zelle eine erste (20,20',20") und eine zweite (21,21',21") Elektrode aufweist,
**dadurch gekennzeichnet, dass** die mindestens zwei Zellen (2,2') elektrisch in Serie geschaltet sind.

2. Deionisationseinrichtung nach Anspruch 1, wobei zwischen einer Elektrode (20) einer ersten Zelle (2) und einer Elektrode (21') einer zweiten Zelle (2') in der ionenhaltigen Flüssigkeit (3) ein Leckstrompfad (5,5',5") definiert ist, welcher ausschliesslich auf lonenleitung beruht, **dadurch gekennzeichnet, dass** eine elektrische Impedanz R_{L} des Leckstrompfades (5,5',5") grösser ist als eine elektrische Impedanz eines direkten Strompfades zwischen denselben Elektroden (20,21').

3. Deionisationseinrichtung nach Anspruch 1, wobei eine anodenseitige Endelektrode (20") und eine kathodenseitige Endelektrode (21") mit der Spannungsquelle (4) verbunden sind, **dadurch gekennzeichnet, dass** die Endelektroden (20",21") eine grössere Doppelschichtkapazität (C_{A}20", C_{A}21") aufweisen als die restlichen Elektroden (20,...,21') der Einrichtung.

4. Deionisationseinrichtung nach Anspruch 3, wobei die anodenseitige Endelektrode (20") und die kathodenseitige Endelektrode (21") eine kleinere geometrische Oberfläche aufweisen als die restlichen Elektroden (20,...,21') der Einrichtung.

5. Deionisationseinrichtung nach einem der Ansprüche 1 bis 4,
**dadurch gekennzeichnet, dass** zur Verlängerung des alternativen Leckstrompfades (5) das Gefäss (1) für die Flüssigkeit (3) getrennte Zuleitungen (12,12') zu den Zellen (2,2') aufweist.

6. Deionisationseinrichtung nach einem der Ansprüche 1 bis 4,
**dadurch gekennzeichnet, dass** jeweils die zweite Elektrode (21) einer ersten Zelle (2) mit der ersten Elektrode (20') einer benachbarten zweiten Zelle (2') zusammenfällt und eine Bipolar-Elektrode (23) bildet.

7. Deionisationseinrichtung nach Anspruch 6, **dadurch gekennzeichnet, dass** die Bipolar-Elektroden (23) Glaskohlenstoff aufweisen.

8. Deionisationseinrichtung nach Anspruch 6, **dadurch gekennzeichnet, dass** zur Verlängerung eines Leckstrompfades (5) die Bipolar-Elektroden (23) randseitig mit einer elektrisch isolierenden Verbreiterung oder Beschichtung (6) versehen sind.

9. Deionisationseinrichtung nach Anspruch 1, **dadurch gekennzeichnet, dass** die mindestens zwei Zellen (2,2') mit Absperrvorrichtungen (7) zur hydrodynamischen Entkopplung versehen sind.

10. Verfahren zur Deionisierung einer ionenhaltigen Flüssigkeit (3) mittels einer Einrichtung nach Anspruch 9, wobei
a) die Einrichtung mindestens zwei Zellen (2,2') umfasst,
b) die Zellen elektrisch in Serie geschaltet und mit einer Spannungsquelle (4) verbunden sind,
c) die Zellen hydrodynamisch parallel angeordnet sind,
d) das Gefäss (1) die ionenhaltige Flüssigkeit (3) zu den Zellen (2,2') führt und
e) die mindestens zwei Zellen mit Absperrvorrichtungen (7) zur hydrodynamischen Entkopplung versehen sind
**dadurch gekennzeichnet, dass** während einer Reinigungsphase die Absperrvorrichtungen (7) die Zellen (2,2') hydrodynamisch entkoppeln.
